# EUROPEAN PATENT APPLICATION

(11) **EP 1 857 952 A1**
(43) Date of publication of application: **21.11.2007**
(21) Application number: 06010251.4
(22) Date of filing: 18.05.2006
(51) Int. Cl.: G06F 21/00

(54) **Method and mobile device for securely making digital content available from a mobile device to at least one other mobile device within a communication network**

(71) Applicant: Vodafone Holding GmbH, 40027 Düsseldorf (DE)
(72) Inventor: Koraichi, Najib, 6333CT Schimmert (NL); Montaner, Javier, 6211 GD Maastricht (NL)
(74) Representative: Müller, Thomas

(57) **Abstract**

The present invention describes a method for securely making digital content available from a mobile device (2) to at least one other mobile device (3) within a communication network wherein a security unit (4) of a transmitting mobile device (2) generates security information relating to digital content to be made available to at least one receiving mobile device (3) in the communication network and at least part of the security information is transmitted to the at least one receiving mobile device (3) via the communication network. The invention further relates to a mobile device (2, 3) for using the inventive method.

## Description

The present invention relates to a method for securely making digital content available from a mobile device to at least one other mobile device within a communication network as well as to a mobile device for securely transmitting digital content.

The security in transmitting data over communication networks is of major importance, in particular due to the increase of misuse of data of third parties. Several solutions to provide security in public networks have been suggested. For example a certificate format, referred to as PGP (Pretty Good Privacy), is being used for transmitting messages such as Email via the Internet or other networks. The disadvantage of these security methods lies in the necessity of connection to a server, which provides the security information. Such a server is also being referred to as the Rights Issuer (RI). When no connection can be established, the security information can thus not be provided and a secured and protected transmission of information becomes impossible.

In EP 1 128 597 B1 this problem is addressed by a different approach. In an Ad hoc communication network a security relation can be established between a first and a second device, wherein the first device has a pair of keys constituting a secret key and a private key. The public key is hashed to a bit string. Then the bit string is encoded into a graphic string. This graphic string is obtained by the first device by means of an optical device. The first device then authenticates the second device by means of the obtained graphic string.

The disadvantage of this method lies in the necessity of providing an optical device for obtaining the graphic string on at least one of the devices, in particular at the device, which is to transmit information to the other device. For mobile devices, such as mobile telephones, this requirement might not be fulfilled. The communication to such a device would not be possible with the method suggested in the prior art.

The problem underlying the invention is thus to provide an easy way for transmission of digital content to mobile devices, which allows the transmission or distribution in a secure way.

According to a first aspect of the invention, the problem is solved by a method for securely making digital content available from a mobile device to at least one other mobile device within a communication network wherein a security unit of a transmitting mobile device generates security information relating to digital content to be made available to at least one receiving mobile device in the communication network and at least part of the security information is transmitted to the at least one receiving mobile device via the communication network.

The transmitting and receiving mobile devices are preferably mobile phones. The digital content may be audio, video, text or a software application. The security information is preferably the information necessary to access, view or render the content and may include an encryption key and additional routing information. The security information may also include a digital signature to sign the content or message transmitted to the receiving mobile device to enable the receiving party to be informed about the source of the content or message. The digital content may be accessed, viewed or rendered by the use of the mobile device, to which the security information received from the mobile device, which generated the security information, has been transmitted, or by a different device.

By the inventive method a local, portable Rights Issuer is provided that can generate usage rights for the digital content. These usage rights can be set according to the user requirements. By using a security unit within the mobile device to generate security information there is no longer a need of a network Rights Issuer. Hence, the method allows for secure transmission of content, even if a network Rights Issuer is unavailable.

Another advantage of the inventive method is that, at the time of generating the security information, e.g. an encryption key and the encrypted content, the potential recipients of the content do not have to be known. This is not possible with prior art solutions, as with those solutions the keys for encryption have to be used in consideration of the expected recipients.

In one embodiment the security unit of the transmitting mobile device generates an encryption key for encrypting the digital content. The encryption key, which preferably is only part of the security information, will herein after also be referred to as CEK (content encryption key). This encryption key can be generated by the SIM card, i.e. by an application using the SIM card, or by a different unit of the mobile device. As the encryption key is generated on the mobile device, which is to transmit the digital content, the key will be available on the mobile device at the time of transmission of the content and can thus be communicated to the receiving mobile device. The encryption key may be transferred together with the encrypted content to another mobile device. It is, however, also possible to only transmit the CEK, which then can be used by the receiving mobile device to access encrypted content stored at a different location.

The security unit of the transmitting mobile device preferably encrypts the digital content with the generated encryption key, before transmitting the content to the at least one receiving mobile device. By encrypting the content before transmission, the encrypted content may be further processed on the mobile device, e.g. provided with additional information or subjected to further encryption.

The security unit of the transmitting mobile device may encrypt the digital content encrypted with the encryption key with an additional key. This additional encryption increases the security level for transmitting digital content and/or security information relating to the usage of the digital content.

The additional key is preferably not generated by the mobile phone or SIM card, but is assigned to it. Such a key may be used, when the security information contains a so called Rights Object. Such a Rights Object includes the information necessary to access protected content and is generally issued by a central Right Issuer. The Rights Object may for example relate to the license for a video. In that case only the Rights Object, previously received from the remote Right Issuer, will have to be stored on the mobile device, preferably on the SIM card. When transmitting the Rights Object to a different mobile device, the Rights Object is encrypted by either the CEK and/or the additional key. The operating system of a mobile device may, and in the case of a mobile phone with a SIM card does, generally include rules preventing the replication of Rights Objects. Alternatively also the Rights Object itself might include the prohibition of replication. Therefore, the Rights Object will be removed from the SIM card of the transmitting mobile phone, once it is forwarded to a receiving mobile phone. Hence, the transmitting mobile device and in particular the SIM card, may serve as an offline representation of the remote Right Issuer.

The additional key may be received at the transmitting mobile device from the receiving mobile device, to which the digital content is to be transmitted to, or from a central processing unit of the communication network storing keys from users of the communication network. In the latter case the receiving mobile device will have to be registered at the central processing unit, which may be a Key Server or a Key directory. The transmitting unit may obtain the key of the receiving mobile device from the Key directory and can use that key for encryption. The receiving mobile device will then be able to decrypt the security information encrypted with this key. It is, however, also possible, that the security information is sent to the Key Server and the Key Server decrypts the message and re-encrypts the message with the key of the receiving mobile phone.

In one embodiment the key is a asymmetric key pair. In that case, the transmitting mobile device will only obtain one key, the public key of the receiving mobile device, whereas the secret key is only stored on the receiving mobile device. The public key may be obtained by the transmitting mobile device form the receiving mobile device or from a central processing unit, which may be a Key Server or a directory hosted by the mobile operator.

In one embodiment of the inventive method the security unit of the mobile device includes usage rules relating to the digital content in the security information. The usage rules are preferably encrypted together with other security information. Such usage rules may relate to the number of allowed uses, to the granting of the right to further transmit the security information, etc.

In another embodiment the security information obtained from a transmitting mobile device is being processed, preferably decrypted, at the security unit of the receiving mobile device. The security unit may in both mobile devices comprise the SIM card of a mobile phone. The security unit of the receiving phone will, hence, posses or have access to the information necessary for decryption, for example the private key. In addition the security unit will be subject to rules within the operating system of the mobile device. Hence, for example Rights Objects will be deleted when being transferred. The processing of the received security information at the security unit of the receiving mobile device thus provides a secure and easy handling.

According to a second aspect of the present invention a mobile device for securely transmitting digital content to at least one receiving mobile device in a communication network is provided, wherein the mobile device comprises a sending unit for sending information to at least one other mobile device in the communication network and at least one security unit for generating security information. If the mobile device is a mobile phone, the security unit may for example comprise the SIM card of the mobile phone.

The security unit of the mobile device may comprise generating means for generating an encryption key for digital content. The generation of the encryption key in a unit of the mobile device is advantageous, since content may be transferred in secure way, even if a remote Right Issuer is unavailable. The security unit may further comprise encryption means for encrypting digital content.

In addition the security unit of the mobile device may serve for authentication of the mobile device to other mobile devices. If the security unit comprises the SIM card of a mobile phone, this SIM card is used as the authentication means.

At least one pair of keys may be assigned to the security unit, wherein the pair of keys is asymmetric. Alternatively a symmetric key may be assigned to each security device.

With the present invention it becomes possible to offer a local, portable Rights Issuer that generates rights according to the user requirements without the need of a network Rights Issuer. In addition the Rights Issuer can be viewed as and serve as an extension controlled offline implementation of a networked Rights Issuer for protected content. This offline Right Issuer can be used to protect and distribute personal content. It can also be exploited to redistribute commercial content to other users. With the present invention content providers will allow for any offline exchange of digital rights to play certain content, as the secure transfer and prohibition of reproduction can be ensured. Hence, the user will not need to connect to a networked server for exchanging content, where the connection costs may add up to an amount, which is as high as the costs for purchasing the content or the Right to use the content, respectively.

Advantages and features described with respect to the inventive method also apply to the inventive mobile device, where applicable, and vice versa.

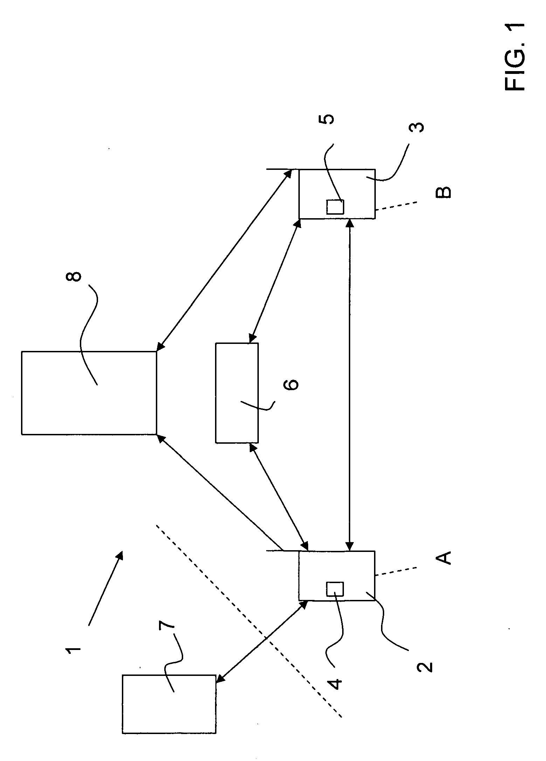

The present invention will now be described again with reference to the enclosed Figure 1, wherein the setup for using the inventive method is schematically shown.

In Figure 1 a system 1 is shown, in which the inventive method can be worked. In the system 1 two mobile devices, depicted as mobile phones 2 and 3, are shown. Mobile phone 2 will hereinafter be referred to as the transmitting mobile phone, whereas mobile phone 3 will be referred to as the receiving mobile phone. It is obvious, that additional mobile phones can be part of the system and that either mobile phone may act as the receiving or the transmitting phone. Each of the mobile phones 2 and 3 include a security unit, which is represented by a SIM card 4 and 5 within the phones 2 and 3.

In addition to the mobile phones 2 and 3, Figure 1 shows a web server 8 for hosting web sites and a Key Server or Key directory 6, wherein keys of users are managed and stored. Finally the system includes a Right Issuer 7 for issuing rights to access digital content.

The way of communication between these entities will be explained with reference to different embodiments of the inventive method. From the description it will become obvious that depending on the usage of the system not all entities, that are shown in Figure 1, have to be present.

In a first example a User A may take a picture with his camera. The camera may be implemented in his mobile phone 2. Alternatively the pictures may be transmitted to his mobile phone 2. User A may select these pictures on his mobile phone 2 and choose an option in a menu to "publish protected pictures". Once this option is selected the mobile phone 2 and/or the SIM card 4 will generate a random Content Encryption Key (CEK). Subsequently either the SIM card 4 or another entity of the mobile phone 4 encrypts the picture with the CEK. The thus encrypted pictures can be uploaded from the mobile phone 2 to a Web Server 8 hosting the web site where the photos are to be published. The server data required for this upload (URL, user name, password, etc.) can be preconfigured and stored in the mobile phone 2 or on the SIM card 4. Otherwise a menu on the mobile phone 2 may request the information from the User A. The connection between mobile phone 2 and the server 8 can be established by connecting locally, for example via Bluetooth, USB cable, etc., or remotely using wireless networks, for example GSM/GPRS, 3G. The pictures could also be stored initially on a PC or a Web server and uploaded to the mobile phone 2.

User A can then inform his friends (User B and other), that the protected pictures are available in his web site. From his phone book on the mobile phone 2 User A selects the other users, who should have access to the photos, e.g. User B.

The encryption of the photos or other digital content can be performed in different ways. Hereinafter two possible options will be described.

According to a first option every SIM card 4, 5 has a different asymmetric key pair for content exchange. Users A and B (and other) can communicate their public key to other users B and A (and other) so that they can share / exchange content securely. In the phonebook of the mobile phone 2, 3 the public key of a User A or B may be kept next to his name, telephone number or e-mail address. The public key of the User B can be received directly form him, for example by using SMS or MMS, or can be obtained from a directory 6 available at the mobile operator's side.

An application of the mobile phone 2 or the SIM card 4 formats a binary message for each of the recipients (B and other). The message includes the CEK encrypted with the public key of the recipient. This encryption is performed by using the SIM card 4. The message may also contain the URL of the web server 8, where the pictures are stored.

The message is sent to each recipient (B and other). Since the length of the message might not fit into a single SMS, concatenated SMS can be used. MMS, SOAP messages or e-mail are other possibilities of exchange methods for this message.

In an alternative option every SIM card 4, 5 has a different symmetric key for content exchange (Ksim). The mobile operator has a secure server (Key Server) 6 where all keys are stored and can be used in a controlled way.

An application on the mobile phone 2, 3 and/or by using the SIM card 4, 5 formats a binary message for each Key Server 6 including the CEK encrypted with the Ksim and the mobile number MSISDN of all the target recipients (B and other). The encryption of the CEK with Ksim is performed by using the SIM card 4. The message may also contain the URL of the web server 8, where the pictures are stored.

The message is sent to the Key Server 6. Since the length of the message might not fit into a single SMS, concatenated SMS can be used. MMS SOAP messages or e-mail are other possibilities to exchange methods for this message.

The Key Server decrypts the CEK and then formats a new message for every target user (B and other) encrypting the CEK with Ksim of every particular user (B and other).

Regardless of whether a symmetric or asymmetric key is being used, the message from the mobile phone 2 or the SIM card 4 or from the Key Server 6 is received by the target user. The mobile phone 3 of the recipient (B and other) informs the user of the new available content. This message can be generated by an application on the SIM card 5 or the mobile phone 3.

The encrypted CEK is passed to the SIM card 5 for decryption. Once the CEK is obtained, it can be kept on the SIM card 5 or passed to the mobile phone 3.

User B, who received the message, connects to the URL using his mobile phone 3 and the mobile phone 3 is able to use CEK to decrypt the pictures and show them to User B. Other users that have not received the CEK will not be able to see the pictures.

The invention is not limited to the described options. It is for example also possible to use a computer to view the pictures. In this case the connection to the target user's mobile phone 3 and SIM card 5 should be achieved over local or remote link. That means the connection between mobile phone 3 and the server 8 can be done for example via Bluetooth, USB cable, etc. or by using wireless networks, for example GSM/GPRS, 3G.

User A can define groups of people, for example family, friends, and generate a shared key distributed to the SIM cards 5 of all the members of the group (Kgroup). The encryption key in this case will preferably be a symmetric key. Instead of the using Ksim to encrypt CEK, User A will use Kgroup. Also for the distribution of content in the future the Kgroup key can be used. These Kgroup keys will be stored on the SIM card 4.

Encrypted pictures can include an identifier of the originator (User A) and an ID of the key used to encrypt the CEK (Kgroup). This enables any user (B and other) having access to the content, who does not have the corresponding CEK, to request from User A the CEK and/Kgroup, in order to view the pictures. User A may decide whether the key is to be passed to the requestor or not. This request could also go through Key Server 6.

On top of the encrypted CEK, usage rules could be included in the message sent from User A or Key Server 6. These rules may include policies, such as that a picture cannot be copied, a picture can be viewed only until a specific date, etc.

The following use cases will describe different situations, where the invention may be put to use.

In a first use case the possibility of transferring rights from one user to another user will be described.

User A has a Rights Object, allowing the usage of a protected piece of digital content, stored on his mobile phone 2 and more specifically on the SIM card 4 of the mobile phone 2. The piece of digital content may be a movie. User A comes across User B at a public place and they discuss about the movie stored on the mobile phone 2 of User A. User B mentions he would like to see this movie. User A proposes to transfer the rights to watch the movie to User B, as he has seen the movie already a few times. User A uses his mobile phone 2 and selects within a preset menu the option of gifting content rights to another user. This menu may be a SIM toolkit menu. User A may then be prompted to enter the phone number of the user, to whom the Rights Object shall be transferred. In the present example, User A enters the mobile phone number of User B. The mobile phone 2 of User A will thus start sending an encrypted SMS to the mobile phone 3 of User B. The encryption and sending can be performed by using a preset secret key, for example the SIM toolkit global DRM secret key.

The mobile phone 3 of User B receives this encrypted SMS and sends it to the SIM card 5 in the mobile phone 3 in accordance to the standards laid down for the mobile phone 3 of User B, for example SIM tookit standards. The SIM card 5 recognizes the DRM SMS and its transport encryption and decrypts the message and stores the Rights Object on the SIM card 5 of User B for use.

In another use case the publishing of private documents, for example photos is described.

User A owns a web site that anyone can freely access. User A has taken some private pictures at a party where he did not personally know every guest. After the party User A wants to publish the pictures.

User A encrypts the pictures using his SIM card 4, which contains a global DRM transport key and a random encryption key generator. The encryption is done with a content encryption key on the SIM card 4.

To the people, who's contact details are known to User A, User A sends an SMS using the SIM toolkit menu. This message is encrypted by the global DRM transport key and contains the specific content encryption key that he used to encrypt the photos posted on the internet.

If a guest from the party, whom he previously did not know, requests to also get access to the pictures. User A can, upon inquiring their mobile phone number, also send the DRM SMS using SIM toolkit.

The present invention is not limited to the usage of the SIM application toolkit but also covers different interfaces to facilitate user interactions. Such applications are for example Java API and operating system proprietary applications including PC based SIM toolkit applications.

## Claims

1. Method for securely making digital content available from a mobile device (2) to at least one other mobile device (3) within a communication network wherein a security unit (4) of a transmitting mobile device (2) generates security information relating to digital content to be made available to at least one receiving mobile device (3) in the communication network and at least part of the security information is transmitted to the at least one receiving mobile device (3) via the communication network.

2. Method according to claim 1, **characterized in that** the security unit (4) of the transmitting mobile device (2) generates an encryption key for encrypting the digital content.

3. Method according to claim 2, **characterized in that** the security unit (4) of the transmitting mobile device (2) encrypts the digital content with the generated encryption key, before transmitting the content to the at least one receiving mobile device (3).

4. Method according to claim 3, **characterized in that** the security unit (4) encrypts the digital content encrypted with the encryption key with an additional key.

5. Method according to claim 4, **characterized in that** the additional key is received at the transmitting mobile device (2) from the receiving mobile device (3) to which the digital content is to be transmitted or from a central processing unit (6) of the communication network storing keys from users of the communication network.

6. Method according to any of claims 1 to 5, **characterized in that** the security unit (4) of the mobile device includes usage rules relating to the digital content in the security information, preferably the usage rules are encrypted together with other security information.

7. Method according to any of claims 1 to 6, **characterized in that** the security information obtained from a transmitting mobile device (2) is being processed, preferably decrypted, at the security unit (5) of the receiving mobile device (3).

8. Mobile device for securely transmitting digital content to at least one receiving mobile device (3) in a communication network, wherein the mobile device (2, 3) comprises a sending unit for sending information to at least one other mobile device (3, 2) in the communication network and at least one security unit (4, 5) for generating security information.

9. Mobile device according to claim 8, **characterized in that** the security unit (4, 5) comprises generating means for generating an encryption key for digital content.

10. Mobile device according to any of claims 8 or 9, **characterized in that** the security unit (4,5) comprises encryption means for encrypting digital content.

11. Mobile device according to any of claims 8 to 10, **characterized in that** the security unit (4, 5) serves for authentication of the mobile device (2,3) to other mobile devices (3, 2).

12. Mobile device according to any of claims 8 to 11, **characterized in that** at least one pair of keys is assigned to the security unit, wherein the pair of keys is asymmetric.
